# FASCICULE DE BREVET EUROPEEN

(11) **EP 0 657 748 B1**
(45) Date de publication et mention de la délivrance du brevet: **15.03.2000**
(21) Numéro de dépôt: 94402801.8
(22) Date de dépôt: 06.12.1994
(51) Int. Cl.: G01S 13/02

(54) **Dispositif d'identification à distance**
Fernidentifizierungsgerät
Remote interrogation apparatus

(30) Priorité: 10.12.1993 FR 9314867
(43) Date de publication de la demande: 14.06.1995
(73) Titulaire: THOMSON-CSF, 75008 Paris (FR)
(72) Inventeur: Blaimont, Michel, F-92402 Courbevoie Cédex (FR); Canal, Yves, F-92402 Courbevoie Cédex (FR); Chenu, Jean, F-92402 Courbevoie Cédex (FR)
(74) Mandataire: Benoit, Monique

(56) Documents cités:
- EP-A- 0 412 884
- EP-A- 0 480 413
- US-A- 4 001 822
- PROCEEDINGS OF THE IEEE 1987 CUSTOM INTEGRATED CIRCUITS CONFERENCE, 4 Mai 1987, PORTLAND, USA pages 684 - 686 J.G. NOLAN ET AL. 'A Radiation Powered single Chip EEPROM ID Code Transceiver'

## Description

La présente invention concerne un dispositif d'identification à distance. Elle s'applique notamment à l'identification d'objets tels que des véhicules par exemple, l'identification s'effectuant selon un processus de question et réponse par l'intermédiaire de signaux radar entre un émetteur d'interrogation et un objet à identifier, l'identification ne nécessitant pas de source d'énergie de la part de l'objet à identifier, l'émetteur et ce dernier pouvant être séparés par une longue distance, de l'ordre de quelques centaines de mètres par exemple.

Dans le cas de l'identification de véhicules notamment, celle-ci s'effectue généralement visuellement et nécessite donc une activité humaine. Cette identification est donc fortement dépendante de la santé visuelle de la personne qui identifie, de la propreté de la plaque d'identification du véhicule et de la visibilité locale en particulier. Des procédés photographiques peuvent se substituer à l'intervention humaine, mais subsiste alors toujours les deux dernières contraintes.

A courtes distances, il existe de nombreux matériels capables d'identifier, de façon automatique et fiable, un objet muni d'un répondeur passif. A titre d'exemple connu, il est possible de citer certains systèmes de lutte contre le vol dont sont équipés notamment de grands distributeurs. Ces systèmes interagissent à distance avec une diode. Cependant la distance d'interaction de ces systèmes n'est que de quelques mètres car au-delà d'une certaine distance, l'énergie reçue par la diode est trop faible pour créer une tension qui dépasse sa tension de seuil. Il serait possible par exemple d'augmenter la puissance du radar qui émet le signal d'interrogation pour augmenter la portée des systèmes à répondeur passif. Cependant ces systèmes ne seraient alors plus compatibles d'un fonctionnement à courte portée, car le répondeur risquerait d'être détruit par la puissance reçue, au niveau de sa diode de détection notamment.

Pour les longues distances, les systèmes d'identification automatique basés sur l'interrogation et la réponse nécessitent toujours une source d'énergie propre associée au répondeur.

Une demande de brevet européen 0480 413 A2 présente un système d'identification à distance où le répondeur ne dispose pas d'une source d'énergie.

Le but de l'invention est de pallier les inconvénients précités en permettant une identification sous forme d'interrogation et-de réponse ayant une longue portée et ne nécessitant pas que le répondeur, c'est-à-dire l'objet à identifier, soit équipé d'une source d'énergie propre pour permettre cette identification.

A cet effet, l'invention a pour objet un dispositif d'identification à distance comportant un interrogateur et un répondeur, dispositif tel que défini dans la revendication 1.

L'invention a pour principaux avantages qu'elle fonctionne aussi bien aux courtes distances qu'aux longues distances, qu'elle est indépendante des conditions atmosphériques, qu'elle est simple à mettre en oeuvre et qu'elle est économique.

D'autres caractéristiques et avantages de l'invention apparaîtront à l'aide de la description qui suit faite en regard des dessins annexés qui représentent :
- la figure 1, le principe d'un dispositif d'identification à distance ;
- la figure 2, une allure de l'énergie reçue par un répondeur en fonction de sa distance à l'interrogateur ;
- la figure 3, un synoptique d'un dispositif selon l'invention ;
- la figure 4, un mode de réalisation possible d'un dispositif selon l'invention.

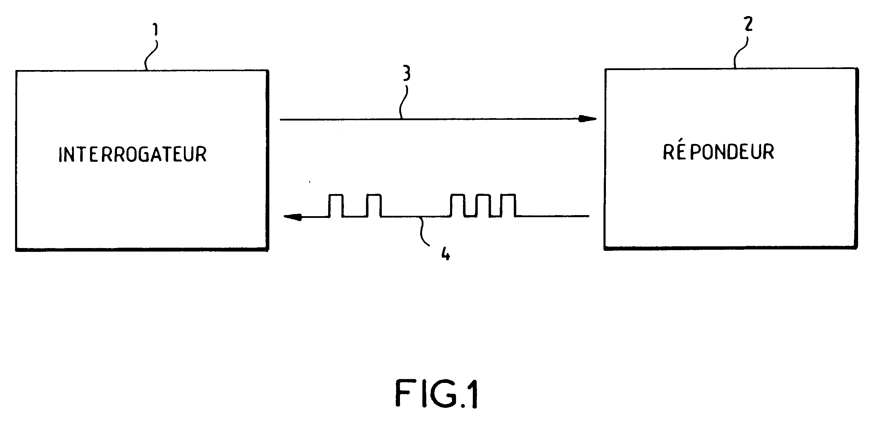

La figure 1 illustre le principe d'un dispositif d'identification à distance où un système interrogateur 1 a pour tâche d'identifier un répondeur 2 situé à distance. L'interrogateur 1 envoie au répondeur 2 un signal hyperfréquence 3. En réponse le répondeur 2 envoie vers l'interrogateur 1 un signal hyperfréquence 4 modulé par un signal de codage représentant par exemple un nombre donné de bits en série, ces bits codant le numéro d'identification du répondeur 2.

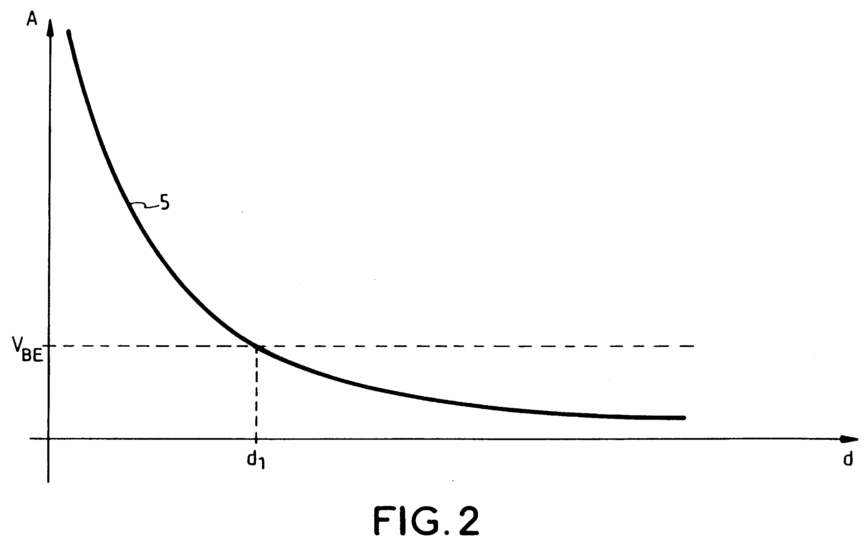

La figure 2 présente une courbe 5 illustrant l'allure de l'énergie reçue par le répondeur 2 en fonction de sa distance d à l'interrogateur 1, l'énergie étant celle qui est émise par l'onde hyperfréquence d'interrogation 3. Plus précisément la courbe 5 illustre l'allure de l'amplitude A d'une tension d'alimentation obtenue à partir de l'énergie de l'onde hyperfréquence d'interrogation 3. Cette tension d'amplitude A alimente notamment les circuits semi-conducteur servant à coder et à réémettre l'onde hyperfréquence de réponse 4. L'amplitude A varie selon l'inverse du carré 1/d² de la distance d entre l'interrogateur 1 et le répondeur 2. Pour une distance d₁, l'amplitude A devient ainsi inférieure à la tension V_{BE} de fonctionnement des semi-conducteurs du répondeur 2, cette tension V_{BE} étant par exemple comprise entre 0,5 et 0,7 volts. Il en résulte qu'au delà de cette distance d₁ entre l'interrogateur 1 et le répondeur 2, ce dernier ne peut, en principe plus fonctionner sans source d'énergie autonome. Cette distance d₁ peut dans la réalité être très faible, de quelques millimètres par exemple, suivant la puissance émise par l'interrogateur 1. Dans le cas où le répondeur 2 est par exemple du type carte à puce, celle-ci peut être équipée d'une pile au lithium mais cette solution présente notamment l'inconvénient qu'il est en permanence difficile de savoir si la pile est chargée ou déchargée. Pour éviter d'équiper le répondeur 2 d'une source d'énergie autonome, il paraît possible d'augmenter la puissance du signal d'interrogation 3 afin d'augmenter la distance d₁ en deçà de laquelle les semi-conducteurs du répondeur 2 ne fonctionnent plus, cependant, outre l'augmentation d'énergie, cette solution ne fonctionnerait pas aux faibles distances où l'énergie reçue par le répondeur, trop puissante, détériorerait les semi-conducteurs.

Selon l'invention la puissance du signal d'interrogation 3 n'est pas nécessairement augmentée mais ce dernier est modulé par un signal, basse fréquence par exemple, le répondeur 2 accumulant l'énergie nécessaire fournie par un courant alternatif à la fréquence du signal de modulation précité et obtenu à partir du signal hyperfréquence 3 modulé afin de créer une tension suffisamment élevée pour le fonctionnement des semiconducteurs utilisés pour le codage et l'émission du signal de réponse, le courant alternatif chargeant par exemple un sytème à base de bobinages et de condensateurs pour la création de cette tension.

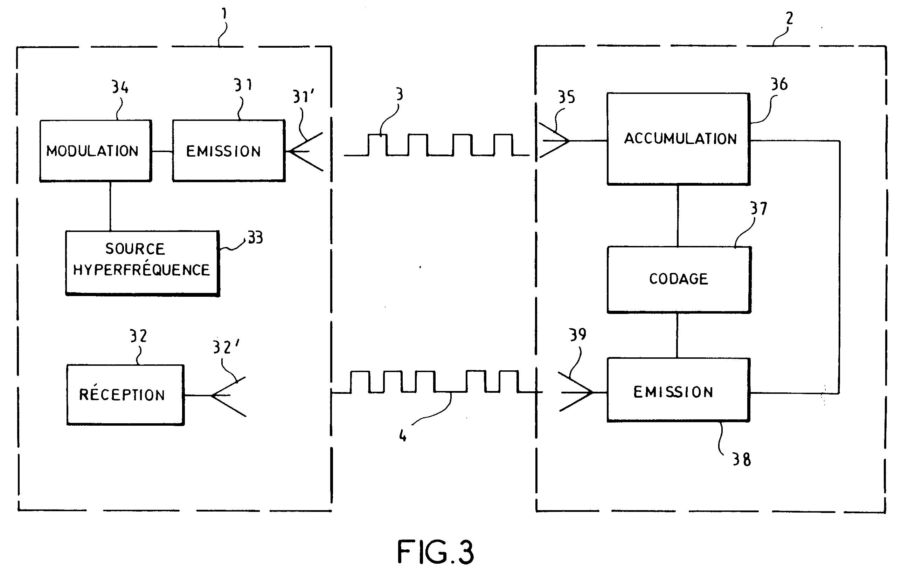

La figure 3 illustre par un synoptique le fonctionnement d'un dispositif selon l'invention. Outre des moyens classiques d'émission 31, de réception 32 associés chacun à une antenne 31', 32' et une source hyperfréquence 33, l'interrogateur 1 contient des moyens de modulation 34, placés par exemple entre la source hyperfréquence 33 et les moyens d'émission 31. Les moyens de modulation 34 modulent l'onde hyperfréquence d'interrogation 3 émise par l'interrogateur 1, le signal de modulation est par exemple un signal carré. Cette modulation s'effectue par exemple par un signal basse fréquence, de plusieurs dizaines de kilo-hertz par exemple. En plus des moyens précités, l'interrogateur comporte par exemple des moyens de traitement destinés à traiter les réponses d'identification reçues. Ses deux antennes 31', 32' peuvent par exemple être confondues.

Le répondeur 2 reçoit par une antenne 35 le signal hyperfréquence d'interrogation modulé 3. Il comporte des moyens d'accumulation 36 accumulant à chaque période du signal de modulation l'énergie émise par l'onde hyperfréquence d'interrogation 3. Dès que l'énergie accumulée nécessaire à l'obtention de la tension d'alimentation pour le fonctionnement des semi-conducteurs de moyens de codage 37 et de moyens d'émission 38 est atteinte par exemple, ces derniers codent et émettent l'onde de réponse 4 du répondeur 2 vers l'interrogateur 1 par l'intermédiaire d'une antenne d'émission 39, celle-ci pouvant par exemple être confondue avec l'antenne de réception 35 du répondeur 2. Ce dernier comporte par ailleurs des moyens de régulation non représentés permettant de réguler la tension d'alimentation des semi-conducteurs dans une plage donnée. Le répondeur 2 comprend en outre des moyens classiques de détection, non représentés, de l'onde hyperfréquence d'interrogation 3.

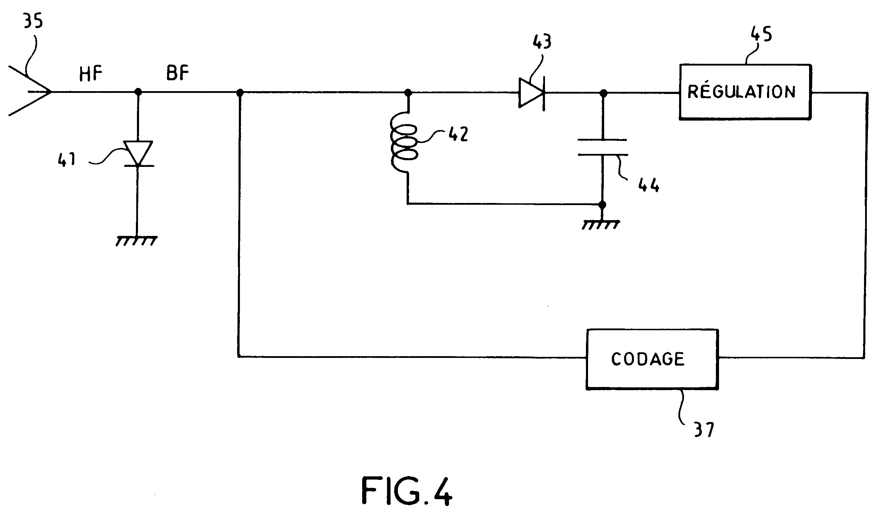

La figure 4 illustre un exemple de mode de réalisation possible d'un répondeur 2 faisant partie d'un dispositif selon l'invention. Dans ce mode de réalisation, le répondeur comporte une antenne 35 servant à la fois à l'émission et à la réception, reliée à l'anode d'une diode de détection 41 dont la cathode est reliée à un potentiel de référence du répondeur. L'anode de la diode 41 est par ailleurs reliée à une première borne d'une inductance 42 dont la deuxième borne est reliée au potentiel de référence du répondeur. Le signal entre l'antenne 35 et la diode de détection 41 est un signal haute-fréquence HF qui crée un signal basse fréquence BF entre la diode de détection 41 et l'inductance 42, cette basse fréquence étant celle du signal de modulation de l'onde hyperfréquence 3 émise par l'interrogateur 1. Le signal basse fréquence BF se traduit par la circulation d'un courant entre la diode de détection 41 et l'inductance 42, le courant chargeant cette dernière en énergie magnétique pendant chaque demi-période positive par exemple. L'inductance 42 est reliée à l'anode d'une deuxième diode 43 de façon à décharger par un courant son énergie magnétique vers un condensateur 44 pendant chaque demi-période négative du signal BF par exemple, le condensateur 44 ayant une borne reliée à la cathode de la deuxième diode. Ce montage de l'inductance 42, de la deuxième diode 43 et du condensateur 44 permet de créer une tension à partir du signal basse fréquence BF obtenu au niveau de la diode de détection 41. L'inductance 42 peut par exemple être remplacée par un transformateur dont l'enroulement primaire serait relié à l'anode de la diode de détection 41 et au potentiel de référence, et dont l'enroulement secondaire serait relié à l'anode de la deuxième diode 43 et au potentiel de référence, le primaire emmagasinant l'énergie magnétique déchargée par le secondaire, un rapport de transformation pouvant par exemple exister entre les deux enroulements, le transformateur étant élévateur par exemple.

Des moyens de régulation 45 sont par exemple relié à la cathode de la deuxième diode 43 et au condensateur 44 pour délivrer une tension dans une plage de fonctionnement donnée. Cette tension alimente notamment les moyens de codage 37. Dès l'établissement de la tension d'alimentation, ces derniers qui contiennent par exemple le numéro d'identification du répondeur commandent par exemple la diode de détection 41 qui est alors par exemple utilisée pour une deuxième fonction consistant notamment à créer des déphasages de 0 ou Π sur l'onde hyperfréquence d'interrogation reçue selon la commande des moyens de codage 37, I'énergie de commande de la diode 41 étant notamment obtenue par la tension d'alimentation produite par l'inductance 42 ou un transformateur, par la deuxième diode 43 et par le condensateur 44, et éventuellement par les moyens de régulation 45 si ceux-ci sont utilisés. Ces derniers 45 peuvent être constitués par exemple d'un système d'écrétage à diode ou d'une régulation à transistor monté en série. Les déphasages de 0 et de Π précités correspondent par exemple respectivement aux bits 0 et 1 codant le numéro d'identification du répondeur. L'onde hyperfréquence d'interrogation reçue est alors réémise avec ces déphasages qui sont détectés par l'interrogateur 1 qui reconstitue alors le code d'identification du répondeur. Par ces déphasages de 0 à Π, le déphaseur modifie en fait le taux d'onde stationnaire de son antenne 35, agissant sur l'onde incidente qu'est l'onde d'interrogation comme un miroir déformant. Pour éviter des confusions entre le signal de modulation du signal d'interrogation et le signal de réponse réémis par le répondeur avec les déphasages précités, le signal de réponse peut par exemple être translaté en fréquence, par des moyens de translation non représentés mais connus de l'homme du métier, de décalage en fréquence démarquant le signal d'interrogation du signal de réponse.

Etant donné que l'énergie nécessaire au répondeur 2 est transmise par l'interrogateur 1, ce dernier commande, comme un interrupteur, la mise en service du répondeur 2. Après un cycle d'interrogation et de réponse, le répondeur 2 redevient notamment inerte.

Le répondeur du dispositif selon l'invention fonctionne ainsi sans source d'énergie autonome propre tout en étant capable de fonctionner à longue distance de l'interrogateur, à plusieurs dizaines ou centaines de mètres par exemple, il fonctionne à ces distances sans augmenter significativement la puissance du signal hyperfréquence émis par l'interrogateur, ce qui lui permet de fonctionner aussi aux faibles distances et donc finalement de fonctionner sur une grande plage de distances.

Le répondeur 2 peut par exemple équiper des véhicules, l'interrogateur 1 étant situé dans un poste fixe ou mobile. Le répondeur peut avoir de très faibles dimensions, il peut être notamment de la forme d'une carte à puce. En effet, la réponse durant très peu de temps, les moyens d'accumulation d'énergie peuvent tenir dans un très faible volume.

## Revendications

1. Dispositif d'identification à distance comportant un interrogateur (1) et un répondeur (2), l'interrogateur (1) envoyant une onde hyperfréquence d'interrogation (3) vers le répondeur, le répondeur (2) comportant des moyens (43, 44, 45) pour transformer l'énergie reçue en tension supérieure aux tensions de seuil de semi-conducteurs utilisés par des moyens de codage (37) et d'émission (38) d'une onde hyperfréquence de réponse (4) vers l'interrogateur (1), caractérisé en ce que l'interrogateur (1) comporte des moyens de modulation (34) pour moduler l'onde hyperfréquence d'interrogation (3) et le répondeur (2) comporte des moyens d'accumulation (36, 42) pour accumuler à chaque période du signal de modulation de l'onde hyperfréquence d'interrogation (3) l'énergie transportée par cette dernière, les moyens d'accumulation (36) étant constitués d'une inductance (42) dont une première borne est reliée à l'anode d'une diode de détection (41) de l'onde hyperfréquence d'interrogation (3), l'inductance étant chargée par un courant à la fréquence du signal de modulation.

2. Dispositif selon la revendication 1, caractérisé en ce que l'onde hyperfréquence de réponse (4) contient un code identifiant le répondeur (2).

3. Dispositif selon la revendication 1, caractérisé en ce que l'inductance (42) est l'inductance de l'enroulement primaire d'un transformateur.

4. Dispositif selon l'une quelconque des revendications précédentes, caractérisé en ce que les moyens pour transformer l'énergie reçue en tension sont constitués au moins de l'inductance (42), d'une deuxième diode (43) dont l'anode est reliée à la première borne de l'inductance (42) et d'un condensateur (44) dont une première borne est reliée à la cathode de la deuxième diode (43), la deuxième borne de l'inductance (42) et la deuxième borne du condensateur (44) étant reliées à un potentiel de référence, la tension étant fournie entre les bornes du condensateur (44).

5. Dispositif selon la revendication 4, caractérisé en ce que des moyens de régulation de la tension (45) sont connectés aux bornes du condensateur (44).

6. Dispositif selon l'une quelconque des revendications 1 à 5, caractérisé en ce que la diode de détection (41) est aussi utilisée pour l'émission de l'onde hyperfréquence de réponse (4), la diode de détection (41) déphasant l'onde hyperfréquence d'interrogation (3) reçue de 0 ou Π en fonction de la commande des moyens de codage (37).

7. Dispositif selon l'une quelconque des revendications précédentes, caractérisé en ce que le signal de modulation est un signal carré.

8. Dispositif selon l'une quelconque des revendications précédentes, caractérisé en ce que le répondeur (2) équipe un véhicule.

9. Dispositif selon l'une quelconque des revendications précédentes, caractérisé en ce que le répondeur (2) est de la forme d'une carte à puce.

10. Dispositif selon l'une quelconque des revendications précédentes, caractérisé en ce que l'onde hyperfréquence de réponse est décalée en fréquence par rapport à l'onde hyperfréquence d'interrogation.

## Claims

1. Remote identification device comprising an interrogator (1) and a responder (2), the interrogator (1) sending a UHF interrogation wave (3) to the responder, the responder (2) comprising means (43, 44, 45) for transforming the energy received into a voltage greater than the threshold voltages of semiconductors used by means for coding (37) and for transmitting (38) a UHF reply wave (4) to the interrogator (1), characterized in that the interrogator (1) comprises modulation means (34) for modulating the UHF interrogation wave (3) and the responder (2) comprises accumulation means (36, 42) for accumulating at each period of the signal for modulating the UHF interrogation wave (3) the energy transported by the latter, the accumulation means (36) consisting of an inductor (42), a first terminal of which is connected to the anode of a diode (41) for detection of the UHF interrogation wave (3), the inductor being charged by a current at the frequency of the modulation signal.

2. Device according to Claim 1, characterized in that the UHF reply wave (4) contains a code identifying the responder (2).

3. Device according to Claim 1, characterized in that the inductor (42) is the inductance of the primary winding of a transformer.

4. Device according to any one of the preceding claims, characterized in that the means for transforming the energy received into a voltage consist at least of the inductor (42), of a second diode (43) whose anode is connected to the first terminal of the inductor (42) and of a capacitor (44), a first terminal of which is connected to the cathode of the second diode (43), the second terminal of the inductor (42) and the second terminal of the capacitor (44) being connected to a reference potential, the voltage being delivered between the terminals of the capacitor (44).

5. Device according to Claim 4, characterized in that means of regulating the voltage (45) are linked to the terminals of the capacitor (44).

6. Device according to any one of Claims 1 to 5, characterized in that the detection diode (41) is also used for the transmission of the UHF reply wave (4), the detection diode (41) shifting the phase of the UHF interrogation wave (3) received by 0 or Π as a function of the control of the coding means (37).

7. Device according to any one of the preceding claims, characterized in that the modulation signal is a square signal.

8. Device according to any one of the preceding claims, characterized in that the responder (2) is fitted to a vehicle.

9. Device according to any one of the preceding claims, characterized in that the responder (2) is in the form of a chip card.

10. Device according to any one of the preceding claims, characterized in that the UHF reply wave is frequency shifted with respect to the UHF interrogation wave.

## Patentansprüche

1. Fernidentifizierungsvorrichtung, die eine Abfrageeinrichtung (1) und eine Antworteinrichtung (2) aufweist, wobei die Abfrageeinrichtung (1) eine Abfrage-Höchstfrequenzwelle zur Antworteinrichtung schickt und die Antworteinrichtung (2) Mittel (43, 44, 45) aufweist, um die empfangene Energie in eine Spannung umzuwandeln, die höher als die Schwellenspannungen von Halbleitern ist, die von Mitteln (37 bzw. 38) zum Codieren und Senden einer Antwort-Höchstfrequenzwelle (4) zur Abfrageeinrichtung (1) verwendet werden, dadurch gekennzeichnet, daß die Abfrageeinrichtung (1) Modulationsmittel (34) aufweist, um die Abfrage-Höchstfrequenzwelle (3) zu modulieren, und die Antworteinrichtung (2) Akkumulationsmittel (36, 42) aufweist, um in jeder Periode des Modulationssignals der Abfrage-Höchstfrequenzwelle (3) die von dieser letzteren transportierte Energie zu akkumulieren, wobei die Akkumulationsmittel (36) aus einer Induktivität (42) gebildet sind, wovon ein erster Anschluß mit der Anode einer Diode (41) zur Erfassung der Abfrage-Höchstfrequenzwelle (3) verbunden ist, wobei die Induktivität durch einen Strom mit der Frequenz des Modulationssignals geladen wird.

2. Vorrichtung nach Anspruch 1, dadurch gekennzeichnet, daß die Antwort-Höchstfrequenzwelle (4) einen die Antworteinrichtung (2) identifizierenden Code enthält.

3. Vorrichtung nach Anspruch 1, dadurch gekennzeichnet, daß die Induktivität (42) die Induktivität der Primärwicklung eines Transformators ist.

4. Vorrichtung nach irgendeinem der vorangehenden Ansprüche, dadurch gekennzeichnet, daß die Mittel zum Umwandeln der empfangenen Energie in eine Spannung wenigstens aus der Induktivität (42), aus einer zweiten Diode (43), deren Anode mit dem ersten Anschluß der Induktivität (42) verbunden ist, und einem Kondensator (44), dessen erster Anschluß mit der Kathode der zweiten Diode (43) verbunden ist, gebildet sind, wobei der zweite Anschluß der Induktivität (42) und der zweite Anschluß des Kondensators (44) mit einem Referenzpotential verbunden sind, wobei die Spannung zwischen den Anschlüssen des Kondensators (44) angelegt wird.

5. Vorrichtung nach Anspruch 4, dadurch gekennzeichnet, daß an die Anschlüsse des Kondensators (44) Spannungsregelungsmittel (45) angeschlossen sind.

6. Vorrichtung nach irgendeinem der Ansprüche 1 bis 5, dadurch gekennzeichnet, daß die Erfassungsdiode (41) außerdem zum Senden der Antwort-Höchstfrequenzwelle (4) verwendet wird, wobei die Erfassungsdiode (41) die Phase der empfangenen Abfrage-Höchstfrequenzwelle (3) in Abhängigkeit von der Steuerung der Codierungsmittel (37) um 0 oder π verschiebt.

7. Vorrichtung nach irgendeinem der vorangehenden Ansprüche, dadurch gekennzeichnet, daß das Modulationssignal ein Rechtecksignal ist.

8. Vorrichtung nach irgendeinem der vorangehenden Ansprüche, dadurch gekennzeichnet, daß mit der Antworteinrichtung (2) ein Fahrzeug ausgerüstet ist.

9. Vorrichtung nach irgendeinem der vorangehenden Ansprüche, dadurch gekennzeichnet, daß die Antworteinrichtung (2) die Form einer Chipkarte hat.

10. Vorrichtung nach irgendeinem der vorangehenden Ansprüche, dadurch gekennzeichnet, daß die Frequenz der Antwort-Höchstfrequenzwelle in bezug auf diejenige der Abfrage-Höchstfrequenzwelle verschoben ist.
